# EUROPÄISCHE PATENTSCHRIFT

(11) **EP 1 300 981 B1**
(45) Veröffentlichungstag und Bekanntmachung des Hinweises auf die Patenterteilung: **15.08.2007**
(21) Anmeldenummer: 02020792.4
(22) Anmeldetag: 17.09.2002
(51) Int. Cl.: H04L 9/32, H04Q 7/38, H04L 29/06

(54) **Verfahren zum Erzeugen eines authentischen elektronischen Zertifikats**
Method for generating an authentic electronic certificate
Procédé de génération d'un certificat électronique authentique

(30) Priorität: 05.10.2001 DE 10149129
(43) Veröffentlichungstag der Anmeldung: 09.04.2003
(73) Patentinhaber: Deutsche Telekom AG, 53113 Bonn (DE)
(72) Erfinder: Heister, Ulrich, 64807 Dieburg (DE); Schwenk, Jörg, Dr., 91239 Henfenfeld (DE)

(56) Entgegenhaltungen:
- WO-A-00/59225
- WO-A-00/79724
- WO-A-01/54346
- WO-A-01/54427

## Beschreibung

Die Erfindung betrifft ein Verfahren zum Erzeugen eines authentischen elektronischen Zertifikats gemäß der im Anspruch 1 angegebenen Art und eine Vorrichtung zur Durchführung des Verfahrens gemäß der im Anspruch 15 angegebenen Art.

Ein wesentlicher Punkt bei dem Austausch elektronischer Informationen ist die Authentizität. Bei den bisher üblichen Übertragungswegen für Informationen wie der Telefonie oder dem Postweg ist die Authentizität durch charakteristische Merkmale wie die menschliche Stimme oder Handschrift weitgehend gewährleistet. Allerdings fehlen bei den heutzutage häufig genutzten elektronischen Übertragungswegen wie E-Mails in der Regel derartige charakteristische, den Autor der übermittelten Informationen kennzeichnende Merkmale.

Die Identifikation eines Kommunikationspartners spielt insbesondere bei der Übertragung vertraulicher Informationen eine große Rolle. Zwar kann durch Verschlüsselung eine gewisse Authentizität sichergestellt werden, allerdings stellen insbesondere die auf der Public-Key-Kryptographie basierenden Verfahren bisher nur unzureichende Methoden zur Sicherstellung der Authentizität zur Verfügung. Eine ausführliche Beschreibung von Public-Key-Kryptographie-Verfahren findet sich in "Moderne Verfahren der Kryptographie" , Beutelspacher, Schwenk, Wolfenstetter, 3.Auflage, 1999, Vieweg Verlag.
Derartige Verfahren eignen sich insbesondere für offene Kommunikationssysteme wie dem Internet, da sie das Management der Schlüssel vereinfachen, die zum Verschlüsseln von Informationen verwendet werden. Im Gegensatz zu geschlossenen Systemen wie beispielsweise Mobilfunksysteme nach dem GSM (Global System for Mobile Communication)-Standard oder Pay-TV-Systeme werden anstelle der geheimen öffentliche Schlüssel beispielsweise via E-Mail zwischen Kommunikationspartnern ausgetauscht. Der geheime Schlüssel bleibt somit ausschließlich in den Händen des Besitzers, so dass nur dieser Nachrichten entschlüsseln kann, die mit seinem öffentlichen Schlüssel verschlüsselt wurden.

Allerdings identifiziert ein öffentlicher Schlüssel alleine noch nicht einen Kommunikationspartner, beispielsweise einen Nutzer, eine Applikation oder einen Host-Computer. Ein Unberechtigter könnte seinen öffentlichen Schlüssel unter falschen Angaben verteilen und dadurch in Besitz von Informationen gelangen, die eigentlich für jemand anderen bestimmt waren. Für eine höhere Sicherheit sollte der öffentliche Schlüssel daher mit Identifikationsdaten des Kommunikationspartners verknüpft werden.

Eine derartige Verknüpfung kann beispielsweise mit dem kryptographischen Mechanismus der Signatur unter Einsatz von Hash-Funktionen erreicht werden. Damit kann zwar eine Identifikation erreicht werden, trotzdem erfordert sie immer noch ein gewisses Vertrauen in die Identifikationsangaben. Ein Rest an Unsicherheit bleibt also in der Regel auch bei Anwendung einer Signatur bestehen.

Dieser Unsicherheitsrest kann beispielsweise in der Regel dadurch beseitigt werden, dass sogenannte "Outof-Band" -Mechanismen genutzt werden, um Authentizität zu erzielen.

Ein solcher Mechanismus ist beispielsweise bei der weit verbreiteten Verschlüsselungs-Software PGP (Pretty Good Privacy) möglich. PGP teilt jedem Nutzer einen privaten, geheimen und einen öffentlichen Schlüssel zu. Der Austausch eines öffentlichen Schlüssels kann wie folgt ablaufen:
1. Ein Nutzer signiert einen Datensatz, der seinen öffentlichen Schlüssel, Identifikationsinformationen wie z.B. seine E-Mail-Adresse und einen kurzen Hashwert enthält, mit seinem privaten Schlüssel.
2. Nach der Übermittlung des signierten Datensatzes gibt der Nutzer telefonisch an den Empfänger des Datensatzes den kurzen Hashwert durch.
3. Der Empfänger kann an der Stimme des Nutzers einerseits dessen Authentizität verifizieren und andererseits durch den kurzen Hashwert die Authentizität des empfangenen Datensatzes ermitteln und entsprechend kennzeichnen.

Ein Nachteil dieses Mechanismus liegt im hohen Aufwand, der zur Authentifizierung zu betreiben ist. Ein Nutzer muss nämlich im Prinzip das oben beschriebene Verfahren mit jedem seiner potentiellen Kommunikationspartner durchführen, um Authentizität zu gewährleisten.

Eine bessere, weil effizientere Lösung des Problems der Gewährleistung von Authentizität kann mittels spezieller Public-Key-Infrastrukturen erreicht werden.

Als Beispiel seien hier Systeme genannt, bei denen Vertrauen in die Authentizität durch eine hierarchische Zertifizierung der öffentlichen Schlüssel erreicht wird. Die hierarchische Zertifizierung besitzt eine baumförmige Struktur. Ein Nutzer muss hier nur einmal manuell mittels eines "Out-of-Band"-Mechanismus das Vertrauen in einen ausgezeichneten und von ihm selbst signierten Datensatz herstellen. Dieser Datensatz wird als Root-Zertifikat bezeichnet. Aus dem Root-Zertifikat lassen sich dann alle anderen Vertrauensbeziehungen herleiten. Die Echtheit der einzelnen Zertifikate kann dadurch überprüft werden, dass der Weg von ihrer Zertifizierungsinstanz über andere bis zu den Root-Zertifikaten ("Stamm"-Zertifikaten) mit direktem Vertrauen zurückverfolgt wird. Diese Lösung ist in den X.509-Standards der ISO ausführlich beschrieben; dort sind auch entsprechende Datenformate spezifiziert.

In der Praxis muss jeder Nutzer vor einem verschlüsselten Informationsaustausch das Root-Zertifikat akzeptieren. Ferner muss eine zentrale Stelle die mit dem jeweiligen öffentlichen Schlüssel verknüpften Identifikationsmerkmale bzw. -daten jedes Nutzers überprüfen. Bei erfolgreicher Überprüfung wird ein Datensatz eines Nutzers mit dem zum Root-Zertifikat gehörenden privaten Schlüssel zertifiziert. Der letzte Schritt ist allerdings immer noch recht aufwendig, da er für jeden Nutzer des Verschlüsselungsverfahrens individuell vorgenommen werden muss.

Eine weitere Verbesserung der Effizienz stellt das Verfahren zur Generierung authentischer Client-Zertifikate dar, wie es heute von dem Unternehmen T-Online in seinem als secureMail bezeichneten Produkt verwendet wird (http://securemail.t-online.de). Bei secureMail kann ein registrierter Teilnehmer des als Provider tätigen Unternehmens T-Online über das Internet ein Zertifikat erzeugen, genauer gesagt bestellen. Hierzu wird eine inverse RADIUS-Abfrage verwendet, um das bestehende Vertragsverhältnis zwischen dem Internet Service Provider (ISP) T-Online und dem Kunden im Zertifikat abzubilden. Dadurch wird eine vollautomatische Generierung authentischer Client-Zertifikate ermöglicht. Allerdings ist hierzu ein bereits bestehender Vertrag mit T-Online und ein Internet-Zugang erforderlich. Viele Nutzer des Internet wollen sich jedoch nicht fest an einen Internet Service Provider binden und bevorzugen lieber anonyme Call-by-Call Internet-Zugänge. Daher ist das Produkt secureMail nur auf die registrierten Teilnehmer von T-Online beschränkt. Viele potentielle Nutzer eines elektronischen Zertifikats sind demnach ausgeschlossen.

Das Dokument WO 01/54346 A1 betrifft ein Verfahren zum Erzeugen eines neuen, zweiten authentischen elektronischen Zertifikats aufgrund eines bereits vorher erzeugten ersten elektronischen Zertifikats.

Aus dem Dokument WO 01/54427 A2 ist es bekannt, daß ein bereits bestehendes Mobilfunk-Vertragsverhältnis zur automatisierten Teilnahme und Freischaltung samt Identitätsfeststellung und Bonitätsprüfung von zusätzlichen Endgeräten oder Diensten für Bestandskunden von zellularen Mobilfunknetzen verwendet werden kann.

Aufgabe der vorliegenden Erfindung ist es, ein Verfahren zum Erzeugen eines authentischen elektronischen Zertifikats und eine entsprechende Vorrichtung zur Durchführung des Verfahrens vorzuschlagen, bei denen die Erstellung eines authentischen elektronischen Zertifikats einerseits sehr einfach abgewickelt und andererseits eine große Anzahl von Personen erreicht werden kann.

Diese Aufgabe wird für das Verfahren zum Erzeugen eines authentischen elektronischen Zertifikats durch die Merkmale des Anspruches 1 und für die Vorrichtung durch die Merkmale des Anspruches 15 gelöst.

Der Erfindung liegt im wesentlichen die Idee zugrunde, den Authentifizierungsvorgang dadurch zu vereinfachen, dass eine bereits früher vorgenommene Authentifizierung, insbesondere dabei entstandene Daten, beim Erzeugen des authentischen elektronischen

Zertifikats ausgenutzt wird bzw. werden. Um den Kreis der potentiellen Nutzer zu erweitern, wird erfindungsgemäß hierzu auf ein bereits bestehendes Mobilfunk-Vertrags- oder ähnliches Verhältnis zwischen einem Inhaber oder Nutzer des elektronischen Zertifikats und einem Dritten, insbesondere einem Mobilfunk-Service-Provider, zurückgegriffen. Wesentlich ist hierfür, dass das bestehende Verhältnis in elektronischer Form vorliegt oder zumindest in eine derartige Form transferierbar ist. Da Mobiltelefone mittlerweile sehr verbreitet sind, kann durch die Erfindung im Prinzip jeder Mobiltelefon-Inhaber ein authentisches elektronisches Zertifikat erzeugen. Vor allem wird der Authentifizierungsschritt wesentlich vereinfacht. Er kann nämlich auf elektronischem Wege ablaufen und gestaltet sich dadurch als benutzerfreundlich. Herkömmliche Methoden wie eingangs beschrieben, insbesondere eine zeitaufwendige persönliche Vorlage von Identifikationsdokumenten durch den Inhaber, können hierdurch entfallen.

Hat der Nutzer eines elektronischen Zertifikats einen Mobilfunkvertrag mit einem Mobilfunknetzbetreiber oder einem sogenannten Mobilfunk-Service-Provider abgeschlossen, sind in der Regel seine Identifikationsmerkmale im Rahmen einer Authentifizierung, üblicherweise durch Überprüfung amtlicher Dokumente wie Ausweise, etc., eingehend überprüft worden. Zudem liegt in der dem Nutzer vom Mobilfunknetzbetreiber oder Service-Provider ausgehändigten SIM (Subscriber Identification Module)-Karte eine eindeutige Identifikation des Nutzers in elektronischer Form vor, insbesondere in einem Mobilfunknetz nach dem GSM-Standard. Die SIM-Karte enthält einen eindeutigen, dem Nutzer zugeteilten individuellen Schlüssel, der auch im Netz des Mobilfunknetzbetreibers elektronisch gespeichert ist.

Diesen Schlüssel kennt nur der Mobilfunknetzbetreiber. Auf der SIM-Karte ist er derart gespeichert, dass ihn normalerweise ein Unberechtigter, selbst der SIM-Kartenbesitzer nicht auslesen kann. Es ist damit an die SIM-Karte gebunden. Da sich diese in der Regel immer in den Händen des Inhabers befindet, besteht eine sehr geringe Gefahr der missbräuchlichen Nutzung. Hierzu müsste ein Unberechtigter in den Besitz der SIM-Karte gelangen. Selbst in diesem Fall kann der SIM-Kartenbesitzer verhältnismäßig schnell die SIM-Karte sperren, so dass keine weiteren Zertifikate erzeugt werden können. Damit ist durch die SIM-Karte, genauer gesagt durch den darauf enthaltenen eindeutigen Schlüssel, sichergestellt, dass nur ein Berechtigter, hier also der Besitzer der SIM-Karte, elektronische Zertifikate erzeugen lassen kann.

Konkret betrifft also die Erfindung ein Verfahren zum Erzeugen eines authentischen elektronischen Zertifikats, bei dem elektronische Daten genutzt werden, die aufgrund eines bestehenden Mobilfunk-Vertragsverhältnisses erzeugt wurden, bei dem eine Authentifizierung eines Inhabers des elektronischen Zertifikats vorgenommen wurde. Unter elektronischen Daten werden hierbei Daten verstanden, die in elektronischer Form vorliegen, also insbesondere elektronisch gespeichert sind.

Die elektronischen Daten können beispielsweise bei einer Anforderung des authentischen elektronischen Zertifikats genutzt werden. Hierbei kann eine implizite Authentifizierung der Anforderung dadurch sichergestellt werden, dass die Anforderung über eine Mobilfunkverbindung und/oder eine Datenverbindung erfolgt, bei deren Aufbau bereits eine Authentifizierung durchgeführt wurde. Vor Weiterleitung der Anforderung kann beispielsweise eine Authentifizierung der Anforderung unter Verwendung der elektronischen Daten vorgenommen werden. Eine besonders hohe Sicherheit kann dadurch erreicht werden, dass die elektronischen Daten in einem Challenge-and-Response-Protokoll zur Authentifizierung der Anforderung genutzt werden. Challenge-and-Response ist hier ganz allgemein als Oberbegriff für kryptographische Protokolle zu verstehen, welche beispielsweise die Identität eines Mobilfunkendgeräts mittels einer von einer Basisstation eines Mobilfunknetz gesendeten Anforderung überprüfen, so wie sie beispielsweise in GSM (Global System for Mobile Communication), UMTS (Universal Mobile Telecommunication System) und ggf. zukünftigen Mobilfunksystemen eingesetzt werden.

Vorzugsweise wird das Erzeugen des elektronischen Zertifikats über einen Server des Vertragspartners des Inhabers initiiert, der hierzu aus einer Datenbank die elektronischen Daten, die insbesondere authentische Informationen über den Inhaber aufweisen, liest. Die elektronischen Daten können beispielsweise der Name, die Adresse, die (Mobil-)Telefonnummer und dergleichen Informationen über den Inhaber sein. Diese aus der Datenbank des Vertragspartners stammenden Daten sind authentisch aufgrund des Vertragsverhältnisses zwischen dem Inhaber und seinem Vertragpartner.

Der Server des Vertragspartners kann ein Public-Key-Schlüsselpaar und eine Zertifikats-Anforderung, insbesondere nach PKCS#10, erzeugen und diese an eine Zertifizierungsstelle bzw. Certification Authority übermitteln. PKCS ist die Abkürzung für "Public Key Cryptography Standard" der Firma RSA Data Security. Die PKCS-Dokumente sind konkrete Lösungsvorschläge für Public-Key-Kryptographie-Systeme. Das Dokument PKCS#10 betrifft Regeln für die Zertifizierung.

Alternativ kann auch direkt ein Mobilfunkendgerät und/oder ein Computer ein Public-Key-Schlüsselpaar und die Anforderung des Zertifikats, insbesondere nach dem PKCS#10-Standard, erzeugen und diese an einen Zertifizierungs-Server übermitteln.

Der Zertifizierungs-Server erzeugt dann vorzugsweise das elektronische Zertifikat. Anschließend kann der Zertifizierungs-Server das elektronische Zertifikat an ein Mobilfunkendgerät und/oder einen Computer des Inhabers übertragen, wo es vorzugsweise gespeichert wird. Dadurch ist der Inhaber im Besitz des Zertifikats. Vom Mobilfunkendgerät des Inhabers kann es auch exportiert werden, beispielsweise auf einen Personal-Computer. Vorzugsweise wird der Export nach PKCS#12 stattfinden, also nach dem in dem PKCS#12-Dokument festgelegten Standard. Hierdurch ist das Zertifikat auch für andere Anwendungen, insbesondere Internet-Anwendungen wie E-Mail-Programme oder Internet-Browser, verwendbar.

In einer bevorzugten Ausführungsform des Verfahrens werden die elektronischen Daten durch Informationen vom Inhaber, insbesondere um eine E-Mail-Adresse, ergänzt.

Nach dieser Ergänzung kann dann eine elektronische Authentifizierung des Inhabers erfolgen, insbesondere nach einem Challenge-and-Response-Verfahren.

In einer derzeit bevorzugten Ausführungsform des erfindungsgemäßen Verfahrens ist das bestehende Mobilfunk-Vertragsverhältnis ein Vertrag zwischen einem Mobilfunknetzbetreiber, Mobilfunk-Service-Provider oder dergleichen Unternehmen und dem Inhaber des elektronischen Zertifikats. Wie bereits erwähnt, eignet sich dieses Vertragsverhältnis besonders vorteilhaft für den beabsichtigten Zweck der Erfindung.

In einer bevorzugten Ausführung wird das elektronische Zertifikat durch den Inhaber über ein Mobilfunkendgerät angefordert, das eine dem Inhaber zugeordnete SIM-Karte umfasst. In einer besonders bevorzugten Ausführungsform arbeitet das Mobilfunkendgerät nach dem GSM- oder UMTS-Standard und kann insbesondere WAP (Wireless Application Protocoll)-Daten verarbeiten. Dadurch wird die Bedienung, insbesondere die Anforderung des Zertifikats durch den Inhaber wesentlich vereinfacht. Prinzipiell eignen sich hierzu auch herkömmliche, nicht WAP-fähige Mobilfunkendgeräte, allerdings ist dann die Bedienung etwas komplizierter.

Das elektronische Zertifikat kann auch über einen Computer angefordert werden. Der Computer kann beispielsweise einen Mobilfunkzugang besitzen. Einen besonders hohen Komfort beim Bedienen ermöglichen Personal-Digital-Assistants mit Mobilfunkzugang; ebenso komfortabel ist beispielsweise ein Laptop-Computer mit Mobilfunk-Einsteckkarte, insbesondere im PC-Card- bzw. PCMCIA-Format. Bei derartigen Endgeräten kann ein spezielles Programm installiert sein, welches zur Anforderung und Verwaltung von elektronischen Zertifikaten vorgesehen ist.

Alternativ ist auch ein Computer einsetzbar, der keinen Mobilfunkzugang, aber dafür eine Datenverbindung besitzt. Diese Datenverbindung kann beispielsweise eine Analog-, ISDN- oder DSL-Modemverbindung zu einem Internet oder allgemein einem Datennetz sein. Eine Anforderung eines authentischen elektronischen Zertifikats kann dann von einem derartigen Computer über die Datenverbindung, insbesondere über ein Internet, zu einem Server übertragen werden. Beispielsweise kann der Server ein Webserver-Programm ausführen, auf das mittels der Datenverbindung vom Computer zugegriffen werden kann. Das Webserver-Programm kann im Internet eine Website anbieten, die von einem beliebigen Computer mit Internet-Anschluss aufrufbar ist. Diese Website kann dann Informationen über der Erzeugen von authentischen elektronischen Zertifikaten bereitstellen und einem Benutzer Hilfestellung beim Erzeugen derartiger Zertifikate bieten.

Insbesondere kann die erwähnte Anforderung eine Rufnummer eines Mobilfunkendgerätes umfassen. Um die beim Anfordern eines authentischen elektronischen Zertifikats über einen beliebigen Computer erforderliche Authentifizierung zu gewährleisten, sollte die Rufnummer angegeben werden, um in den Vorgang des Erzeugens des authentischen elektronischen Zertifikats das Mobilfunkendgerät einbinden zu können.

Vorzugsweise wertet der Server die empfangene Anforderung aus und überträgt eine Kurzmitteilung an das Mobilfunkendgerät und/oder eine Nachricht an den Computer.

Zum Erzeugen des authentischen elektronischen Zertifikats kann die empfangene Kurzmitteilung und/oder Nachricht bestätigt werden. Dies stellt sicher, dass das Zertifikat nicht von einem Dritten angefordert wird, der zwar die Rufnummer eines Mobilfunkendgerätes kennt, aber dieses nicht besitzt.

Vorzugsweise erfolgt die Bestätigung, indem die empfangene Kurzmitteilung zurück an den Server übertragen wird oder die Nachricht mit einer weiteren Nachricht, die einen vorgegebenen Kode umfasst, oder mit einer Kurzmitteilung, die einen vorgegebenen Kode umfasst, beantwortet wird.

Eine erfindungsgemäße Vorrichtung zum Erzeugen eines authentischen elektronischen Zertifikats, die insbesondere nach dem erfindungsgemäßen Verfahren arbeitet, weist folgendes auf:
- einen Server eines Telekommunikationsnetzes, der Mittel zur Verarbeitung von Zertifikatsanforderungen und Steuerung des Erzeugens authentischer elektronischer Zertifikate umfasst,
- eine Datenbank mit authentischen Informationen bzw. Daten von Nutzern des Telekommunikationsnetzes, auf die der Server zugreifen kann, und
- einen Zertifizierungs-Server, der mit dem Server kommunizieren und authentische elektronische Zertifikate erzeugen kann.
Diese Vorrichtung ermöglicht ein einfaches Erzeugen von authentischen elektronischen Zertifikaten, und zwar insbesondere aufgrund der Datenbank, die authentische Informationen bzw. Daten enthält. Diese Informationen bzw. Daten können elektronisch verarbeitet und zum Erzeugen von authentischen elektronischen Zertifikaten genutzt werden.

Server und Zertifizierungs-Server umfassen vorzugsweise eine Internet-Verbindung, über die sie Daten über das Internet austauschen kann. Vorzugsweise sollten die Daten verschlüsselt über das Internet ausgetauscht werden, um die Sicherheit gegen unbefugtes "Abhören" zu erhöhen.

Server und Datenbank sind in einer besonders bevorzugten Ausführungsform Bestandteil eines Mobilfunknetzes und/oder eines Datennetzes. Vorzugsweise kann in diesem Fall der Server Daten über eine Funkverbindung mit einem Mobilfunkendgerät und/oder über eine Datenverbindung mit einem Computer austauschen.

Um eine komfortable Bedienung der Vorrichtung zu ermöglichen, kann der Server ein WAP-Server sein. In diesem Fall kann mittels eines WAP-fähigen Mobilfunkendgerätes auf den Server über das WAP-Protokoll zugegriffen werden.

Weitere Vorteile, Merkmale und Anwendungsmöglichkeiten der vorliegenden Erfindung zum Erzeugen eines authentischen elektronischen Zertifikats ergeben sich aus der nachfolgenden Beschreibung in Verbindung mit dem in den Zeichnungen dargestellten Ausführungsbeispielen.

In der Beschreibung, in den Patentansprüchen, der Zusammenfassung und in den Zeichnungen, werden die in der hinten angeführten Liste der Bezugszeichen verwendeten Begriffe und zugeordneten Bezugszeichen verwendet.

In den Zeichnungen bedeutet:
- Fig. 1: ein Ausführungsbeispiel der Erfindung, bei dem ein authentisches elektronisches Zertifikat mittels eines Mobilfunkgerätes nach dem GSM-Standard von einem Nutzer des Zertifikats angefordert wird;
- Fig. 2A: ein erstes Ausführungsbeispiel des Ablaufs des erfindungsgemäßen Verfahrens zum Erzeugen eines authentischen elektronischen Zertifikats über einen Computer;
- Fig. 2B: ein zweites Ausführungsbeispiel des Ablaufs des erfindungsgemäßen Verfahrens zum Erzeugen eines authentischen elektronischen Zertifikats über einen Computer; und
- Fig. 2C: ein drittes Ausführungsbeispiel des Ablaufs des erfindungsgemäßen Verfahrens zum Erzeugen eines authentischen elektronischen Zertifikats über einen Computer.

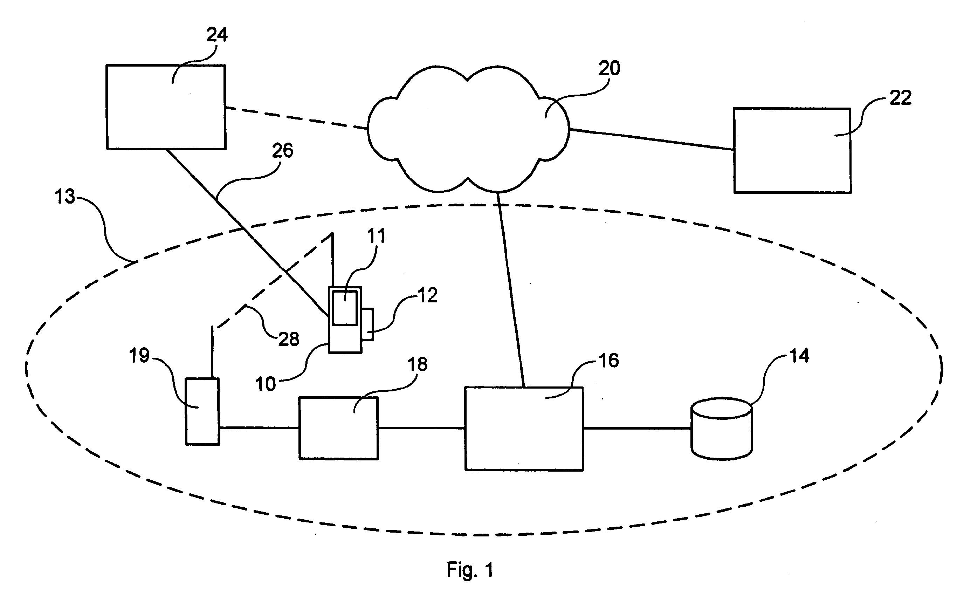

In Fig. 1 ist ein WAP-fähiges Mobilfunkendgerät 10 in ein Mobilfunknetz 13 eingebucht. Das Mobilfunkendgerät 10 umfasst eine SIM-Karte 12, die dem Besitzer des Mobilfunkendgerätes 10 zugeordnet ist. Die SIM-Karte 12 enthält einen geheimen Schlüssel, der eindeutig dem Besitzer zugeordnet ist. Dieser Schlüssel befindet sich ferner in einer Datenbank 14 des Mobilfunknetzbetreibers.

Bekanntermaßen bucht sich das Mobilfunkendgerät 10 in das Mobilfunknetz 13 nach dem Challenge-and-Response-Verfahren ein (genauer gesagt nach dem Challenge-and-Response-Protokoll). Ergänzend sei hier angemerkt, dass in zukünftigen Mobilfunksystemen wie beispielsweise UMTS (Universal Mobile Telecommunication System) auch andere Authentisierungs-Protokolle zum Einsatz kommen können; auch diese können im Rahmen der Erfindung verwendet werden, da es hier nur auf eine verlässliche Authentifizierung des Teilnehmers ankommt, und nicht auf die konkrete Umsetzung. Beim Einbuchen wird vom Mobilfunknetz bzw. -system 13 eine Zufallszahl generiert, die an das Mobilfunkendgerät 10 und weiter an die SIM-Karte 12 gesendet wird. Die SIM-Karte 12 wiederum erzeugt eine Antwort, die aus der Zufallszahl und dem geheimen Schlüssel von der SIM-Karte 12 berechnet wurde. Die Antwort wird über eine Funkverbindung 28 zwischen Mobilfunkendgerät 10 und einer Basisstation 19 an das Mobilfunknetz 13 zurück gesendet.

Im Mobilfunksystem wurde zwischenzeitlich von einem Server 16 aus der Datenbank 14 der geheime Schlüssel des Besitzers der SIM-Karte 12 gelesen. Mit ihm wird aus der Zufallszahl die Antwort berechnet und mit der empfangenen Antwort verglichen. Wenn beide Werte übereinstimmen, wird das Mobilfunkendgerät 10 als berechtigt erkannt; hierdurch wird ihm der Zugang zu den Diensten des Mobilfunknetzes 13 erlaubt.

Mit der Zufallszahl und dem teilnehmerspezifischen geheimen Schlüssel wird ferner ein Sitzungsschlüssel erzeugt, der zum Verschlüsseln der zwischen Mobilfunkendgerät 12 und Mobilfunknetz 13 über die Luftschnittstelle bzw. Funkverbindung 28 ausgetauschten Daten dient. Hierdurch wird einerseits ein sicheres Einbuchen bzw. Anmelden eines Mobilfunkendgerätes 10 in bzw. an das Mobilfunknetz 13 und andererseits eine sichere, weil verschlüsselte Kommunikation gewährleistet.

Nach dem Einbuchen des Mobilfunkendgerätes 10 in das Mobilfunknetz 13 kann über das Mobilfunkendgerät 10 auf WAP-Dienste des Mobilfunknetzbetreibers zugegriffen werden. Ein derartiger WAP-Dienst kann darin bestehen, ein authentisches elektronisches Zertifikat für den Besitzer des SIM-Karte 12 bereitzustellen. Hierzu wird über das eingebuchte Mobilfunkendgerät 10 dieser WAP-Dienst aufgerufen.

Ein Basisstationskontroller 18, der die Anforderung des WAP-Dienstes über die Funkverbindung 28 der Basisstation 19 mit dem Mobilfunkendgerät 10 empfängt, leitet die Anforderung an einen WAP-Server 16 des Mobilfunknetzes 13 weiter.

Der WAP-Server 16 liest daraufhin dem Besitzer der SIM-Karte 12 zugeordnete authentische Daten aus der Datenbank 14, wie beispielsweise den Namen, die Adresse und die Mobiltelefonnummer des Besitzers des Mobilfunkendgerätes 10. Diese Daten wurden bei Abschluss eine Vertrags zwischen dem Besitzer der SIM-Karte 12 und dem Betreiber des Mobilfunknetzes 13 verifiziert, insbesondere unter Vorlage von den Besitzer authentifizierenden Dokumenten wie ein amtlicher Ausweis.

Der WAP-Server 16 überträgt nun die ausgelesenen Daten an den Basisstationskontroller 18, der sie wiederum über die Basisstation 19 und die mit dem Sitzungsschlüssel verschlüsselte Funkverbindung 28 an das Mobilfunkendgerät 10 übermittelt. Im Mobilfunkendgerät 10, genauer gesagt auf dessen Display 11 können dann diese Daten angezeigt werden. Die Daten werden vorzugsweise in Form eines Datensatzes übertragen, der auch freie Felder enthalten kann. In die freien Felder kann dann der Besitzer des Mobilfunkendgerätes 10 selbst weitere Daten eingeben, beispielsweise eine E-Mail-Adresse, an die das authentische elektronische Zertifikat übermittelt werden soll oder einen öffentlichen Schlüssel, der zertifiziert werden soll (falls bereits ein Public-Key-Schlüsselpaar vorliegt).

Anschließend kann der Besitzer eine weitere Authentifizierung über das Mobilfunkendgerät, beispielsweise durch Tastendruck, nach dem Challenge-and-Response-Verfahren einleiten, bei welcher der Ihm zugeordnete und auf der SIM-Karte 12 vorhandene geheime Schlüssel verwendet wird. Mit dieser weiteren Authentifizierung wird eine besonders hohe Sicherheit erzielt. Eine implizite Sicherheit und Authentifizierung ist aber auch ohne diese weitere Authentifizierung gegeben, da nur das Mobilfunkendgerät des Antragstellers über den Sitzungsschlüssel verfügt, der es ihm erlaubt, die verschlüsselt übertragenen Daten zu entschlüsseln und darzustellen, und die Antwort verschlüsselt zurück zu übertragen.

Daraufhin wird der gesamte Datensatz, also die auf dem Display des Mobilfunkendgerätes 10 angezeigten Daten aus der Datenbank 14 sowie die vom Besitzer selbst eingegebenen neuen Daten über die Funkverbindung 28 an den Basisstationskontroller 18 übertragen. Dies erfolgt vorzugsweise im PKCS#10-Format, falls das Mobilfunkendgerät bereits ein Schlüsselpaar besitzt oder in der Lage ist, ein solches zu generieren. Ansonsten wäre es auch möglich, den Datensatz mit einem Message Authentication Code (MAC), der mit Hilfe des geheimen Schlüssels der SIM-Karte generiert wird, zu sichern. Dieser sendet die empfangenen Daten wiederum an den WAP-Server 16. Die Zertifikatsanforderung und ggf. das Schlüsselpaar übermittelt der WAP-Server 16 daraufhin über eine Verbindung zum Internet 20 oder eine andere Datenverbindung an eine Zertifizierungsstelle, um die Erzeugung eines authentischen elektronischen Zertifikats zu initiieren.

Die Zertifizierungsstelle kann gegebenenfalls ein Public-Key-Schlüsselpaar generieren, wenn das Mobilfunkendgerät dazu nicht in der Lage ist. Das Problem der sicheren, vertraulichen Übertragung des privaten Schlüssels an das Mobilfunkendgerät kann dann mit den Sicherheitsmechanismen der jeweiligen Mobilfunkstandards gelöst werden.

Die Zertifizierungsstelle ist ein Zertifizierungs-Server 22 und nur von autorisierten Clients über das Internet 20 oder eine andere Datenverbindung erreichbar. Ein derartiger autorisierter Client ist der WAP-Server 16 des Mobilfunknetzes. Aufgrund der Zertifikatsanforderung erzeugt nunmehr der Zertifizierungs-Server 22 wie angefordert das Zertifikat, das er an den WAP-Server 16 über das Internet 20 übermittelt. Der WAP-Server 16 überträgt daraufhin das Zertifikat und gegebenenfalls das erzeugte Public-Key-Schlüsselpaar an das Mobilfunkendgerät 10.

Das Zertifikat und das Public-Key-Schlüsselpaar können über eine spezielle Verbindung 24 zwischen dem Mobilfunkendgerät 10 und einem Computer 24 auf dessen Festplatte geladen werden. Ferner kann es von dem Computer 24 über eine Verbindung zum Internet 20 an weitere mit dem Internet 20 verbundene Geräte, insbesondere Computer und Server übertragen werden.

Schließlich kann vom Zertifizierungs-Server 22 bei Angabe einer E-Mail-Adresse durch den Besitzer des Mobilfunkendgeräts 10 das Zertifikat an diese übermittelt werden. Diese E-Mail-Adresse kann die Adresse eines Zertifikats-Servers im Internet sein, von dem sich Nutzer Zertifikate herunter laden können.

Ein Empfänger des Zertifikats kann nun insbesondere mittels eines speziell dafür vorgesehenen Programms die Authentizität eines öffentlichen Schlüssels überprüfen. Dadurch, dass das Zertifikat von einer vertrauenswürdigen Stelle, in diesem Fall dem Mobilfunknetzbetreiber als Vertragspartner des Besitzers des Mobilfunkendgerätes 10 und insbesondere der SIM-Karte 12 ausgestellt wurde, kann der Empfänger bei erfolgreicher Überprüfung des öffentlichen Schlüssels durch das Zertifikat vertrauenswürdige Informationen mit dem öffentlichen Schlüssel verschlüsseln und an den Besitzer des Mobilfunkendgerätes übertragen.

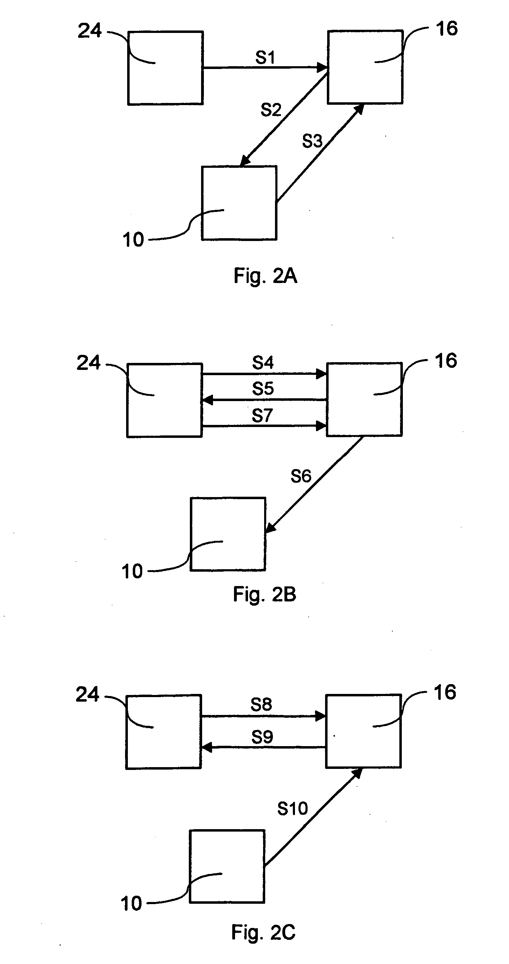

Obwohl in Zusammenhang mit Fig. 1 die Anforderung eines authentischen elektronischen Zertifikats über ein Mobilfunkendgerät beschrieben wurde, ist es im Rahmen der Erfindung auch vorgesehen, dieses Zertifikat über einen Computer wie beispielsweise den Computer 24 in Fig. 1 anzufordern. Fig. 2A-2B zeigen den Ablauf des Anforderns und Erzeugens eines authentischen elektronischen Zertifikats mittels des Computers 24. Zur Verifikation wird allerdings ein Mobiltelefon 10 benötigt.

In Fig. 2A wird in einem ersten Schritt S1 vom Computer 24 aus das authentische elektronische Zertifikat von einem Server 16 angefordert. Die Anforderung erfolgt derart, dass der Computer 24 mit dem Internet verbunden ist und über eine Website des Servers 16 das Zertifikat anfordern. Ein Webformular der Website umfasst hierbei ein Feld, in das eine Rufnummer eines Mobilfunkgerätes 10 eingegeben wird. Nach Absenden des Webformulars an den Server 16 wertet dieser die mit dem Webformular empfangenen Daten, insbesondere die Rufnummer aus.

Daraufhin sendet der Server 16 in einem Schritt S2 eine SMS an das Mobilfunkgerät 10 mit der Rufnummer. Die empfangene SMS umfasst ein Abfrage wie etwa "Wollen Sie das angeforderte Zertifikat erhalten?". Diese Anfrage wird in einem weiteren Schritt S3 dadurch beantwortet, dass ein Benutzer per Tastendruck am Mobilfunkendgerät 10 entweder "Ja" oder "Nein" eingibt. Hierzu kann beispielsweise Tasten des Nummernblocks des Mobilfunkendgerätes 10 vorgesehen sein. Abhängig von der Antwort-SMS erzeugt dann der Server 16 das angeforderte authentische elektronische Zertifikat und überträgt es an eine vorgegebene E-Mail-Adresse oder per SMS an das Mobilfunkendgerät 10.

Beim in Fig. 2B dargestellten Ablauf wird die Anforderung des authentischen elektronischen Zertifikats ebenfalls mittels eines Computers 24 initiiert (Schritt S4). Im Unterschied zu Fig. 2A wird jedoch in einem auf den Schritt S4 folgenden Schritt S5 vom Server 16 ein Webformular an den Computer 24 übertragen. Dieses Webformular umfasst ein Feld zur Eingabe einer Zeichenfolge. In einem weiteren Schritt S6 sendet der Server 16 eine SMS an das Mobilfunkendgerät 10, welche eine bestimmte Zeichenfolge enthält. Ein Benutzer kann nun die Zeichenfolge aus der SMS in das erwähnte Feld im Webformular auf dem Computer 24 eingeben und das so ausgefüllte Webformular an den Server 16 zurücksenden (Schritt S7). Die Zeichenfolge stellt sozusagen sicher, dass der tatsächliche Besitzer des Mobilfunkendgerätes 10 das Zertifikat anfordert. Ein Mißbrauch durch Dritte ist hierdurch erschwert, da diese erst im Besitz des Mobilfunkendgerätes 10 sein müssen. Anschließend erzeugt wieder der Server 16 das angeforderte authentische elektronische Zertifikat und überträgt es an eine vorgegebene E-Mail-Adresse oder per SMS an das Mobilfunkendgerät 10.

Ein dritte Alternative ist in Fig. 2C dargestellt. Hierbei wird wiederum die Anforderung des authentischen elektronischen Zertifikats mittels eines Computers 24 initiiert (Schritt S8). Hier sendet nun der Server 16 ein Webseite an den Computer 24, welche etwa folgende Information umfasst: "Bitte geben Sie die folgende Nummer in Ihr Mobilfunkendgerät ein und drücken Sie Senden: 1234567890" (Schritt S9). Ein Benutzer gibt nunmehr die Zeichenfolge aus der Webseite in sein Mobilfunkendgerät 10 ein und überträgt diese mittels einer SMS an den Server 16 (Schritt S10). Nach Empfang dieser SMS erzeugt der Server 16 das angeforderte authentische elektronische Zertifikat und überträgt es an eine vorgegebene E-Mail-Adresse oder per SMS an das Mobilfunkendgerät 10.

Es sei noch angemerkt, dass anstelle einer Übertragung des authentischen elektronischen Zertifikats auch ein Hyperlink oder eine Nummer übertragen werden können, die zum Abrufen des authentischen elektronischen Zertifikats dienen. Der Hyperlink kann beispielsweise mittels einer E-Mail an eine vorgegebene E-Mail-Adresse übertragen werden. Die Nummer kann sowohl per E-Mail als auch per SMS übertragen werden. Sie kann beispielsweise als Zugangskode zu einer gesicherten Website dienen, von der das authentische elektronische Zertifikat herunter geladen werden kann.

Ein wesentlicher Unterschied der Verfahren der Fig. 2A-2B zum oben beschriebenen Verfahren nach Fig. 1 besteht darin, dass die Initiierung des Erzeugens des authentischen elektronischen Zertifikats nicht über das Mobilfunkendgerät 10, sondern über einen beliebigen Computer 24 erfolgt. Zwar ist auch hierbei weiterhin das Mobilfunkendgerät 10 erforderlich, das eine SIM-Karte mit der beim Anfordern angegebenen Rufnummer bzw. Mobilfunk-Anschlussnummer zum Authentifizieren umfasst. Dies liegt insbesondere daran, dass zum Authentifizieren entweder eine Anfrage vom Mobilfunknetzbetreiber oder -provider an das Mobilfunkendgerät 10 erfolgt und/oder eine SMS mit einem Kode vom Mobilfunkendgerät 10 an den Mobilfunknetzbetreiber oder -provider übermittelt wird.

Die Initiierung des Erzeugens eines authentischen elektronischen Zertifikats über den Computer 24 besitzt vor allem den Vorteil, dass die Handhabung gegenüber der Initiierung mittels des Mobilfunkendgerätes 10 wesentlich vereinfacht ist. Bei dem Mobilfunkendgerät 10 steht in der Regel nur ein kleines Display und eine kleine Tastatur für das Anzeigen bzw. die Eingabe von Daten zur Verfügung. Dies kann mittels eines Computers 24 mit seinem größeren Display und seiner komfortablen Tastatur bequemer erfolgen. Zudem besitzt ein Computer 24 den Vorteil, dass er einem Benutzer, der z.B. das erfindungsgemäße Verfahren zum ersten Mal nutzt, eine bessere Hilfestellung in Form von umfangreichen Hilfefunktionen und einer Anzeige von ausführlichen Hilfetexten geben kann.

Die Erfindung zeichnet sich dadurch aus, dass authentische elektronische Zertifikate einfach, schnell, bequem und sicher erstellt werden können. Die authentischen elektronischen Zertifikate können im Prinzip für beliebige Anwendungen verwendet werden und besonders einfach über Datennetze verteilt werden. Authentizität der erstellten Zertifikate wird dadurch erreicht, dass ein Vertragsverhältnis, das in elektronischer Form vorliegt oder zumindest einfach in diese Form übertragbar ist, dazu genutzt wird, um die Zertifikate zu erzeugen. Insbesondere wird hierzu ein Vertragsverhältnis zwischen einem Mobilfunknetzbetreiber oder dergleichen Unternehmen und einem Mobilfunknutzer verwendet. Der Vorteil besteht hierbei insbesondere darin, dass über ein Mobilfunkendgerät ein sicherer Zugang auf die authentische Informationen bzw. Daten des Vertragsverhältnisses möglich ist, die für die Erzeugung von einem authentischen elektronischen Zertifikat nutzbar sind.

### BEZUGSZEICHENLISTE

- 10: Mobilfunkendgerät
- 11: Display
- 12: SIM-Karte
- 13: Mobilfunknetz
- 14: Datenbank
- 16: (WAP-)Server
- 18: Basisstationskontroller
- 19: Basisstation
- 20: Internet
- 22: Zertifizierungs-Server
- 24: Computer
- 26: Verbindung zwischen Computer und Mobilfunkendgerät
- 28: Funkverbindung
- S1-S10: Verfahrensschritte

## Patentansprüche

1. Verfahren zum Erzeugen eines authentischen elektronischen Zertifikats, bei dem elektronische Daten genutzt werden, die aufgrund eines bestehenden Mobilfunk-Vertragsverhältnisses erzeugt wurden, bei dem eine Authentifizierung eines Inhabers des elektronischen Zertifikats vorgenommen wurde, **dadurch gekenntzeichnet**, dass das elektronische Zertifikat über einen Computer (24) angefordert wird, wobei der Computer (24) eine Anforderung über eine Datenverbindung, insbesondere über ein Internet (20), zu einem Server (16) überträgt (S1; S4; S8), wobei die Anforderung eine Rufnummer eines Mobilfunkendgerätes (10) umfasst, wobei der Server (16) die empfangene Anforderung auswertet und eine Kurzmitteilung (S2; S6) an das Mobilfunkendgerät (10) oder eine Nachricht (S5; S9) an den Computer (24) überträgt, wobei zum Erzeugen des authentischen elektronischen Zertifikats die empfangene Kurzmitteilung bzw. die empfangene Nachricht bestätigt wird (S3; S7; S10).

2. Verfahren nach Anspruch 1 **dadurch gekennzeichnet, dass** die Bestätigung (S3; S7; S10) der empfangenen Kurzmitteilung derart erfolgt, dass eine vorbestimmte Taste oder Tastenkombination am Mobilfunkendgerät, wie entweder die Taste "Ja" oder "Nein", bedient und diese damit erzeugte Kurzmitteilung an den Server (16) übertragen wird (S3).

3. Verfahren nach Anspruch 1 **dadurch gekennzeichnet, dass** die Bestätigung (S3; S7; S10) der empfangenen Kurzmitteilung bzw, der empfangenen Nachricht derart erfolgt, dass eine weitere Nachricht (S7), die einen vorgegebenen Kode umfasst, oder eine weitere Kurzmitteilung (S10), die einen vorgegebenen Kode umfasst, an den Server (16) gesandt wird.

4. Verfahren nach einem der vorangehenden Ansprüche, **dadurch gekennzeichnet, dass** eine implizierte Authentifizierung der Anforderung **dadurch** sichergestellt wird, dass die Anforderung über eine gesicherte Datenverbindung erfolgt, bei deren Aufbau bereits eine Authentifizierung durchgeführt wurde.

5. Verfahren nach Anspruch 4, **dadurch gekennzeichnet, dass** vor Weiterleitung der Anforderung eine Authentifizierung der Anforderung unter Verwendung der elektronischen Daten vorgenommen wird.

6. Verfahren nach Anspruch 4 oder 5, **dadurch gekennzeichnet, dass** die elektronischen Daten in einem Challenge-and-Response-Protokoll zur Authentifizierung der Anforderung genutzt werden.

7. Verfahren nach einem der vorangehenden Ansprüche, **dadurch gekennzeichnet, dass** das Erzeugen des elektronischen Zertifikats über einen Server (16) des Vertragspartners des Inhabers initiiert wird, der hierzu aus einer Datenbank (14) die elektronischen Daten, die insbesondere authentische Informationen über den Inhaber aufweisen, liest.

8. Verfahren nach Anspruch 7, **dadurch gekennzeichnet, dass** der Server (16) des Vertragspartners ein Public-Key-Schlüsselpaar und die Anforderung des Zertifikats, insbesondere nach dem PKCS#10-Standard, erzeugt und diese an einen Zertifizierungs-Server (22) übermittelt.

9. Verfahren nach einem der Ansprüche 4 bis 7, **dadurch gekennzeichnet, dass** der Computer (24) ein Public-Key-Schlüsselpaar und die Anforderung des Zertifikats, insbesondere nach dem PKCS#10-Standard, erzeugt und diese an einen Zertifizierungs-Server (22) übermittelt.

10. Verfahren nach Anspruch 8 oder 9, **dadurch gekennzeichnet, dass** der Zertifizierungs-Server (22) das elektronische Zertifikat erzeugt.

11. Verfahren nach Anspruch 10, **dadurch gekennzeichnet, dass** der Zertifizierungs-Server (22) das elektronische Zertifikat an ein Mobilfunkgerät. (10) und/oder einen Computer (24) des Inhabers überträgt.

12. Verfahren nach einem der vorangehenden Ansprüche, **dadurch gekennzeichnet, dass** die elektronischen Daten durch Informationen vom Inhaber, insbesondere um eine E-Mail-Adresse, ergänzt werden.

13. Verfahren nach Anspruch 12, **dadurch gekennzeichnet, dass** eine elektronische Authentifizierung des Inhabers nach der Ergänzung durch Informationen des Inhabers erfolgt, insbesondere nach einem Challenge-and-Response-Verfahren.

14. Verfahren nach einem der vorangehenden Ansprüche, **dadurch gekennzeichnet, dass** das bestehende Mobilfunk-Vertragsverhältnis ein Vertrag zwischen einem Mobilfunknetzbetreiber, Mobilfunk-Service-Provider oder dergleichen Unternehmen und dem Inhaber des elektronischen Zertifikats ist.

15. Vorrichtung zum Erzeugen eines authentischen elektronischen Zertifikats, die nach dem Verfahren gemäß einem der vorangehenden Ansprüche arbeitet, mit
- einem Server (16) eines Telekommunikationsnetzes, der Mittel zur Verarbeitung von Zertifikationsanforderungen und zur Steuerung des Erzeugens authentischer elektronischer Zertifikate umfasst,
- einer Datenbank mit authentischen Informationen bzw. Daten von Nutzern des Telekommunikationsnetzes, auf die der Server (16) zugreifen kann,
- einem Zertifizierungs-Server (22), der mit dem Server (16) kommunizieren und authentische elektronische Zertifikate erzeugen kann.

16. Vorrichtung nach Anspruch 15, **dadurch gekennzeichnet, dass** der Server (16) und der Zertifizierungs-Server (22) eine Internet-Verbindung umfassen, über die sie Daten über das Internet (20) austauschen können.

17. Vorrichtung nach Anspruch 15 oder 16, **dadurch gekennzeichnet, dass** Server (16) und Datenbank (14) Bestandteil eines Mobilfunknetzes (13) und/oder eines Datennetzes sind.

18. Vorrichtung nach einem der Ansprüche 15 bis 17, **dadurch gekennzeichnet, dass** der Server (16) Daten über eine Funkverbindung mit einem Mobilfunkendgerät (10) und über eine Datenverbindung mit einem Computer (24) austauschen kann.

19. Vorrichtung nach einem der Ansprüche 15 bis 18 **dadurch gekennzeichnet, dass** der Server (16) ein WAP-Server ist.

## Claims

1. Method for generating an authentic electronic certificate using electronic data generated on the basis of an existing mobile telephone contract, wherein an owner of the electronic certificate is authenticated, **characterized in that** the electronic certificate is requested via a computer (24), the computer (24) transmitting a request via a data link, more particularly via an Internet (20), to a server (16) (S1; S4; S8), the request including a call number of a mobile telephone terminal (10), the server (16) evaluating the received request and transmitting a short message (S2; S6) to the mobile telephone terminal (10) or a message (S5; S9) to the computer (24), wherein, for generation of the authentic electronic certificate, the received short message or the received message is confirmed (S3; S7; S10).

2. Method according to claim 1, **characterized in that** the received short message is confirmed (S3; S7; S10) such that a predetermined key or key combination on the mobile telephone terminal, such as either the "Yes" or "No" key, is used, said thereby generated short message being transmitted to the server (16) (S3).

3. Method according to claim 1, **characterized in that** the received short message or received message is confirmed (S3; S7; S 10) such that a further message (S7), including a predetermined code, or a further short message (S10), including a predetermined code, is sent to the server (16).

4. Method according to any one of the preceding claims, **characterized in that** an implied authentication of the request is guaranteed **in that** the request is made via a secure data link whose setting-up already included an authentication.

5. Method according to claim 4, **characterized in that**, before being forwarded, the request is authenticated using the electronic data.

6. Method according to claim 4 or 5, **characterized in that** the electronic data are used to authenticate the request in a challenge-and-response protocol.

7. Method according to any one of the preceding claims, **characterized in that** the generation of the electronic certificate is initiated via a server (16) of the owner's contract partner, wherein, for this purpose, said server (16) reads the electronic data from a database (14), said electronic data including, in particular, authentic information on the owner.

8. Method according to claim 7, **characterized in that** the server (16) of the contract partner generates a public key pair and the certificate request, more particularly according to the PKCS#10 standard, and sends same to a certification server (22).

9. Method according to any one of claims 4 to 7, **characterized in that** the computer (24) generates a public key pair and the certificate request, more particularly according to the PKCS#10 standard, and sends same to a certification server (22).

10. Method according to claim 8 or 9, **characterized in that** the certification server (22) generates the electronic certificate.

11. Method according to claim 10, **characterized in that** the certification server (22) transmits the electronic certificate to a mobile telephone device (10) and/or to a computer (24) of the owner.

12. Method according to any one of the preceding claims, **characterized in that** the electronic data are supplemented by information from the owner, more particularly by an email address.

13. Method according to claim 12, **characterized in that,** after the owner's information has been added, the owner is electronically authenticated, more particularly according to a challenge-and-response method.

14. Method according to any one of the preceding claims, **characterized in that** the existing mobile telephone contract is a contract between a mobile telephone network operator, mobile telephone service provider or similar enterprise and the owner of the electronic certificate.

15. Device for generating an authentic electronic certificate, said device employing the method according to any one of the preceding claims, with
- a server (16) of a telecommunications network, said server (16) including means for processing certification requests and for controlling the generation of authentic electronic certificates;
- a database with authentic information or data of users of the telecommunications network, the server (16) being able to access said information or data;
- a certification server (22) capable of communicating with the server (16) and of generating authentic electronic certificates.

16. Device according to claim 15, **characterized in that** the server (16) and the certification server (22) include an Internet connection over which they are able to exchange data over the Internet (20).

17. Device according to claim 15 or 16, **characterized in that** server (16) and database (14) are part of a mobile telephone network (13) and/or of a data network.

18. Device according to any one of claims 15 to 17, **characterized in that** the server (16) is able to exchange data with a mobile telephone terminal (10) over a radio link and with a computer (24) over a data link.

19. Device according to any one of claims 15 to 18, **characterized in that** the server (16) is a WAP server.

## Revendications

1. Procédé de génération d'un certificat électronique authentique dans lequel on utilise des données électroniques qui ont été générées sur la base d'une relation contractuelle de radiotéléphonie mobile existante, dans lequel une authentification d'un titulaire du certificat électronique a été réalisée, **caractérisé en ce que** la demande de certificat électronique s'effectue par l'intermédiaire d'un ordinateur (24), l'ordinateur (24) transmettant (S1 ; S4 ; S8) une demande à un serveur (16) par l'intermédiaire d'une liaison de données, notamment par l'intermédiaire d'un internet (20), la demande contenant un numéro d'appel d'un terminal radiotéléphonique mobile (10), le serveur (16) exploitant la demande reçue avant de transmettre un message court (S2 ; S6) au terminal radiotéléphonique mobile (10) ou un courrier (S5 ; S9) à l'ordinateur (24), le message court reçu ou le courrier reçu étant confirmé (S3 ; S7 ; S10) pour générer le certificat électronique authentique.

2. Procédé selon la revendication 1, **caractérisé en ce que** la confirmation (S3 ; S7 ; S10) du message court reçu s'effectue par activation d'une touche prédéterminée ou d'une combinaison de touches sur le terminal radiotéléphonique mobile telle que la touche « oui » ou la touche « non », ce qui entraîne la transmission (S3) du message court généré à destination du serveur (16).

3. Procédé selon la revendication 1, **caractérisé en ce que** la confirmation (S3 ; S7 ; S10) du message court reçu ou du courrier reçu s'effectue par transmission d'un autre courrier (S7) contentant un code prédéterminé ou d'un autre message court (S10) contenant un code prédéterminé à destination du serveur (16).

4. Procédé selon l'une des revendications précédentes, **caractérisé en ce qu'**une authentification implicite de la demande est assurée par le fait que celle-ci s'effectue par l'intermédiaire d'une liaison de données sécurisée pour laquelle une authentification avait déjà été réalisée au moment de son établissement.

5. Procédé selon la revendication 4, **caractérisé en ce que** l'acheminement de la demande est précédé d'une authentification de la demande moyennant des données électroniques.

6. Procédé selon la revendication 4 ou 5, **caractérisé en ce que** les données électroniques sont utilisées dans un protocole de type interrogation et réponse pour l'authentification de la demande.

7. Procédé selon l'une des revendications précédentes, **caractérisé en ce que** la génération du certificat électronique est déclenchée par l'intermédiaire d'un serveur (16) du partenaire contractuel du titulaire qui, pour ce faire, lit les données électroniques contenant notamment des informations authentifiant le titulaire, dans une base de données (14).

8. Procédé selon la revendication 7, **caractérisé en ce que** le serveur (16) du partenaire contractuel génère une paire de clés publiques et la demande du certificat, notamment selon la norme PKCS#10, avant de les transmettre à un serveur de certification (22).

9. Procédé selon l'une des revendications 4 à 7, **caractérisé en ce que** l'ordinateur (24) génère une paire de clés publiques et la demande du certificat, notamment selon la norme PKCS#10, avant de les transmettre à un serveur de certification (22).

10. Procédé selon la revendication 8 ou 9, **caractérisé en ce que** le serveur de certification (22) génère le certificat électronique.

11. Procédé selon la revendication 10, **caractérisé en ce que** le serveur de certification (22) transmet le certificat électronique à un terminal radiotéléphonique mobile (10) et/ou à un ordinateur (24) du titulaire.

12. Procédé selon l'une des revendications précédentes, **caractérisé en ce que** des informations du titulaire, notamment une adresse de courrier électronique, sont ajoutées aux données électroniques.

13. Procédé selon la revendication 12, **caractérisé en ce qu'**une authentification électronique du titulaire s'effectue après l'ajout des informations du titulaire, notamment selon un procédé de type interrogation et réponse.

14. Procédé selon l'une des revendications précédentes, **caractérisé en ce que** la relation contractuelle de radiotéléphonie mobile est un contrat entre un exploitant de réseau de radiotéléphonie mobile, un fournisseur de services de radiotéléphonie mobile ou une entreprise similaire et le titulaire du certificat électronique.

15. Dispositif de génération d'un certificat électronique authentique fonctionnant selon le procédé selon l'une des revendications précédentes, et comportant
- un serveur (16) d'un réseau de télécommunications comprenant des moyens pour le traitement de demandes de certificat et pour la commande de la génération de certificats électroniques authentiques,
- une base de données comportant des informations authentiques ou des données d'utilisateurs du réseau de télécommunications à laquelle le serveur (16) a accès,
- un serveur de certification (22) apte à communiquer avec le serveur (16) et à générer des certificats électroniques authentiques.

16. Dispositif selon la revendication 15, **caractérisé en ce que** le serveur (16) et le serveur de certification (22) comprennent une liaison internet leur permettant d'échanger des données par l'intermédiaire de l'internet (20).

17. Dispositif selon la revendication 15 ou 16, **caractérisé en ce que** le serveur (16) et la base de données (14) font partie intégrante d'un réseau de radiotéléphonie mobile (13) et/ou d'un réseau de données.

18. Dispositif selon l'une des revendications 15 à 17, **caractérisé en ce que** le serveur (16) est apte à échanger des données avec un terminal de radiotéléphonie mobile (10) par l'intermédiaire d'une liaison radiotéléphonique et avec un ordinateur (24) par l'intermédiaire d'une liaison de données.

19. Procédé selon l'une des revendications 15 à 18, **caractérisé en ce que** le serveur (16) est un serveur WAP.
